# EUROPEAN PATENT APPLICATION

(11) **EP 3 528 487 A1**
(43) Date of publication of application: **21.08.2019**
(21) Application number: 19156103.4
(22) Date of filing: 08.02.2019
(51) Int. Cl.: H04N 1/405, B29C 64/393, B33Y 10/00, B33Y 30/00, B33Y 50/02, B29C 64/112

(54) **SHAPING DEVICE AND SHAPING METHOD**

(30) Priority: 15.02.2018 JP 2018025254
(71) Applicant: Mimaki Engineering Co., Ltd., Tomi-City, Nagano 389-0512 (JP)
(72) Inventor: NISHIO, Keita, Tomi-city, Nagano 389-0512 (JP)
(74) Representative: Fédit-Loriot

(57) **Abstract**

To appropriately shape a high quality shaped object.

A shaping device that shapes a shaped object includes a slice data generating unit that generates a plurality of slice data indicating cross sections of the shaped object; a head unit that ejects a shaping material based on each slice data; and a dither matrix storage unit; where the slice data generating unit determines a position to eject the coloring material in at least one part of the shaped object by performing halftone processing using any one of the dither matrices stored in the dither matrix storage unit; and changes the dither matrix to use at the time of generating each slice data in a preset order every time a preset number of the slice data are generated.

## Description

### TECHNICAL FIELD

The present disclosure relates to a shaping device and a shaping method.

### DESCRIPTION OF THE BACKGROUND ART

A shaping device (3D printer) that shapes a shaped object using an inkjet head is conventionally known. In such a shaping device, for example, the shaped object is shaped by overlapping a plurality of ink layers formed by the inkjet head through the layering shaping method. In recent years, it has been proposed to shape a shaped object colored in various colors (see, for example, Japanese Unexamined Patent Publication No. 2016-26915). In this case, the coloring of the shaped object is performed by forming a region, where color can be visually recognized from the outside of a three-dimensional object, with coloring inks. Furthermore, various colors are represented by using inks of plural colors, which become basic colors of color representation, for the coloring inks

Patent Document 1: Japanese Unexamined Patent Publication No. 2016-26915

### SUMMARY

However, when shaping a shaped object colored through such a method, for example, continuous stripes such as unintended vertical stripes form, and the texture of the surface of the shaped object may not be a desired texture in some cases. As a result, it is sometimes difficult to appropriately shape a high quality shaped object. The present disclosure provides a shaping device and a shaping method capable of overcoming such a problem.

The inventor of the present application conducted a thorough research on the cause of the formation of the continuous stripes described above. It was found that the stripes form when a region in which the color or the color strength appears slightly different from the surrounding is generated in each ink layer to be layered, and such regions are lined in a layering direction over a plurality of ink layers. Furthermore, it was found that the cause of such a region generating in each ink layer is the use of the processing of dither method (dithering process) in the halftone processing (halftone process) performed at the time of generating the slice data which is data indicating a cross section of the shaped object.

More specifically, when the shaping is performed through the layering shaping method, slice data corresponding to each ink layer to be layered is generated and ink is ejected according to the slice data, thereby forming the respective ink layers. Furthermore, in this case, data specifying an ejection position of the ink of each color used for shaping is generated as the slice data. Moreover, when carrying out color representation using inks of a plurality of colors, for example, the halftone processing is performed in the same manner or in the similar manner as in the case of printing a two-dimensional image with an inkjet printer. Furthermore, in this case, it is conceivable to perform the processing of the dither method as the halftone processing. However, at the time of shaping a shaped object, a great number of ink layers are formed so as to overlap each other as opposed to when printing the two-dimensional image. In this case, it is considered that the influence of performing the halftone processing similarly occurs in a plurality of ink layers that are successively overlapped, and is visually recognized as continuous stripes as described above. Such a problem is particularly likely to occur, for example, in the case of shaping polygonal columns, circular columns, and the like when the inks in the same state are stacked at the same place.

The inventor of the present application found that the occurrence of continuous stripes can be appropriately prevented by differing the manner of performing the halftone processing at the time of generating slice data corresponding to the ink layers that are successively overlapped. Furthermore, consideration is first made to differ the dither matrix to use in the dither process with each other as a method of differing the manner of performing the halftone processing. However, at the time of generating the slice data corresponding to the ink layers that are successively overlapped, if the dither matrices are merely made different from each other, the dither matrix to use at the time of generating the respective slice data becomes non-deterministic and the quality of the shaped object to shape may become difficult to predict. In addition, when the quality of the shaped object which has actually been shaped does not become the desired quality, it may become difficult to investigate the cause. Furthermore, when using a dither matrix in a non-deterministic manner, management of the dither matrix may become complicated.

The inventor of the present application considered, through further intensive researches, preparing a plurality of dither matrices in which the order of use is set in advance, and repeatedly using the respective dither matrices in order at the time of generating each slice data corresponding to each layer to be layered. Furthermore, experiments and the like were actually conducted to confirm that such a method can appropriately prevent the occurrence of continuous stripes described above. Moreover, in this case, consideration is made to manage a plurality of dither matrices, for example, in the form of a three-dimensional matrix formed by overlapping a plurality of dither matrices. With such a configuration, for example, the plurality of dither matrices can be more easily and appropriately managed.

Furthermore, the inventors of the present application found the features necessary for obtaining such effects by further intensive research, and contrived the present disclosure. In order to solve the problem described above, the present disclosure relates to a shaping device configured to shape a shaped object by layering a shaping material in a preset layering direction, the shaping device including a slice data generating unit configured to generate a plurality of slice data, which are data respectively indicating cross sections of the shaped object at different positions in the layering direction; a head unit configured to eject the shaping material based on each slice data; and a dither matrix storage unit configured to store a plurality of dither matrices; wherein each slice data is data indicating a position to eject the shaping material; one or more coloring materials are used for the shaping material; the slice data generating unit is configured to: determine a position to eject the coloring material in at least one part of the shaped object by performing halftone processing using any one of the dither matrices stored in the dither matrix storage unit; and change the dither matrix to use at the time of generating each slice data in a preset order every time a preset number of the slice data is generated.

With this configuration, for example, unintended continuous stripes and the like can be appropriately prevented from occurring due to coloring by differing the dither matrix to use at the time of generating the slice data corresponding to the ink layers that are successively overlapped. A high quality shaped object thus can be more appropriately shaped. In this case, for example, the quality of the shaped object to shape can be more appropriately predicted by using the dither matrix in a preset order. Furthermore, it is possible to more easily investigate the cause, for example, compared with the case where the dither matrix is non-deterministically used for example, when the quality of the shaped object which has actually been shaped is not the desired quality, and the like. Furthermore, in this case, for example, it is possible to appropriately prevent the management of the dither matrix from becoming complicated by using a plurality of fixed dither matrices.

Furthermore, in this case, the slice data generating unit preferably changes the dither matrix to use at the time of generating each slice data in a preset order every time one slice data is generated. With such a configuration, for example, the continuous stripes, and the like can be more appropriately prevented from occurring. In addition, in this configuration, each of the plurality of dither matrices is, for example, a two-dimensional matrix. In this case, the dither matrix storage unit stores a plurality of dither matrices, for example, by storing a three-dimensional matrix formed by overlapping a plurality of dither matrices. In this case, the slice data generating unit sequentially changes the dither matrix to use at the time of generating each slice data in accordance with the order in which the plurality of dither matrices are overlapped in the three-dimensional matrix every time a preset number of slice data are generated. With such a configuration, for example, the plurality of dither matrices can be more easily and appropriately managed. Moreover, when using such a three-dimensional matrix, the values of the elements of the three-dimensional matrix are preferably set so that the same numerical values are not continuously lined. In this case, the same numerical values not being continuously lined means, for example, that adjacent elements in the matrix do not have the same value.

A matrix in which the size in each direction is set according to the resolution of shaping is preferably used as a three-dimensional matrix. In this case, each direction of the three-dimensional matrix is a direction corresponding to the layering direction, the main scanning direction, and the sub-scanning direction set in the shaping device. More specifically, in this configuration, the shaping device further includes a scan driving unit that causes the head unit to perform a main scanning operation of ejecting the shaping material while moving relative to the shaped object in the main scanning direction. In this case, the main scanning direction can be considered as, for example, the moving direction of the head unit during the main scanning operation. Furthermore, the direction in which the plurality of dither matrices are overlapped in the three-dimensional matrix is the direction corresponding to the layering direction. In this case, the sub-scanning direction is a direction orthogonal to the layering direction and the main scanning direction. In this case, with respect to the direction corresponding to each of the layering direction, the main scanning direction, and the sub-scanning direction, the number of elements of the three dimensional matrix to be lined is preferably set such that the number of elements lined is larger in the direction corresponding to the direction of higher resolution of shaping. With this configuration, for example, distances corresponding to the period of repeatedly applying the dither matrix in the halftone processing can be made uniform with respect to each direction. Moreover, for example, it is possible to more appropriately perform the halftone processing that matches the resolution in each direction.

Furthermore, in this configuration, the dither matrix storage unit may store a plurality of three-dimensional matrices different from each other. With such a configuration, the dither matrix to use can be appropriately changed, for example, according to the quality or the like required for the shaped object to shape. In addition, in this case, at the time of generating a plurality of slice data corresponding to one shaped object, the slice data generating unit selects, for example, one of the three-dimensional matrices stored in the dither matrix storage unit. Then, the dither matrix to use at the time of generating each slice data is sequentially changed according to the order in which the plurality of dither matrices are overlapped in the selected three-dimensional matrix every time a preset number of slice data are generated. With this configuration, the dither matrix to use can be appropriately changed, for example, in accordance with the selected three-dimensional matrix.

In this case, for example, a plurality of three-dimensional matrices having different sizes may be stored in the dither matrix storage unit. In this case, the size of the three-dimensional matrix being different means that, for example, the size in a plane orthogonal to the direction in which the plurality of dither matrices are overlapped in the three-dimensional matrix is different. With such a configuration, various dither matrices can be easily and appropriately used. Furthermore, the size of the three-dimensional matrix being different may mean that, for example, the size in the direction in which the plurality of dither matrices are overlapped in the three-dimensional matrix is different.

In this configuration, it is conceivable, for example, to shape a shaped object in which at least one part of a region where colors can be visually recognized from outside is colored as the shaped object. In this case, the shaped object includes, for example, a coloring region formed in a region where colors can be visually recognized from the outside using a coloring material and an interior region formed on the inner side of the coloring region. Then, at the time of generating the slice data corresponding to such a shaped object, the slice data generating unit determines, for example, at least a position to eject the coloring material with respect to the coloring region by performing the halftone processing using a dither matrix. With this configuration, for example, the slice data corresponding to a shaped object in which at least the surface is colored can be appropriately generated. Moreover, for example, a shaped object in which at least the surface is colored can be appropriately shaped.

Use of a shaping method having the features similar to above, and the like can be considered for the configuration of the present disclosure. In this case as well, for example, effects similar to above can be obtained. Furthermore, such a shaping method can be considered as, for example, a manufacturing method of a shaped object.

### EFFECTS OF DISCLOSURE

According to the present disclosure, for example, a high quality shaped object can be appropriately shaped.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a view showing one example of a shaping system 10 according to one embodiment of the present disclosure. FIG. 1A shows one example of a configuration of the shaping system 10. FIG. 1B shows one example of a configuration of a shaping device 12. FIG. 1C shows one example of a configuration of a head unit 102.
FIG. 2 is a view explaining a shaped object 50 to be shaped by the shaping device 12 and a shaping operation of the present example. FIG. 2A shows one example of a configuration of the shaped object 50. FIG. 2B is a flowchart showing one example of the shaping operation.
FIG. 3 is a view explaining a dither matrix used in the present example. FIG. 3A shows one example of a dither matrix stored in a dither matrix storage unit 108. FIG. 3B shows one example of a plurality of two-dimensional dither matrices overlapped in a three-dimensional matrix.
FIG. 4 is a view explaining an operation of generating slice data. FIG. 4A is a flowchart showing one example of an operation of generating the slice data. FIG. 4B is a flowchart showing one example of an operation of a halftone processing performed at the time of generating the slice data.

### DETAILED DESCRIPTION OF EMBODIMENTS

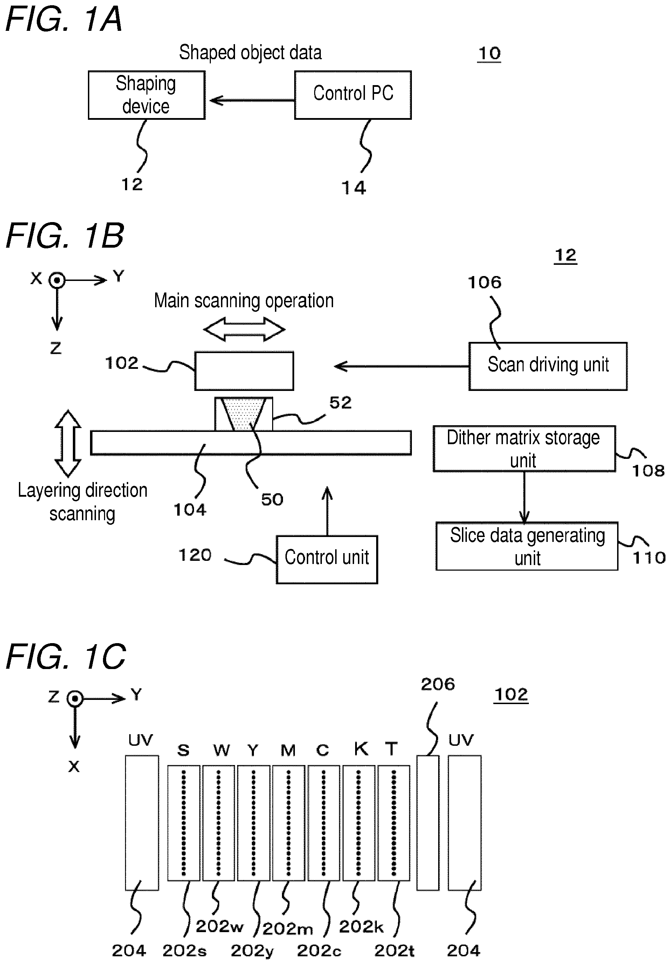

Hereinafter, an embodiment according to the present disclosure will be described with reference to the drawings. FIG. 1 shows one example of a shaping system 10 according to one embodiment of the present disclosure. FIG. 1A shows one example of a configuration of the shaping system 10. In this example, the shaping system 10 is a shaping system that shapes a three-dimensional shaped object, and includes a shaping device 12 and a control PC 14.

The shaping device 12 is a device for executing shaping of a shaped object, and shapes a shaped object according to the control of the control PC 14. More specifically, the shaping device 12 is a full-color shaping device capable of shaping a shaped object colored in full color, and receives shaped object data, which is data indicating a shaped object to shape, from the control PC 14, and shapes the shaped object based on the shaped object data. Furthermore, for example, consideration is made to use data indicating a shaped object in a general-purpose format that does not depend on the model of the shaping device 12 or the like for the shaped object data. Moreover, the shaping device 12 generates a plurality of slice data, which are data respectively indicating a cross section of the shaped object at different positions from each other in a layering direction, on the basis of the shaped object data. Then, the shaping of a portion corresponding to each cross section of the shaped object is carried out according to each slice data. In this case, the layering direction is the direction of layering the shaping material at the time of shaping the shaping device 12. The operation of generating the slice data will be described in more detail later.

The control PC 14 is a computer (host PC) that controls the operation of the shaping device 12. In this example, the control PC 14 specifies the direction (layout) and the like at the time of shaping to generate the shaped object data for the shaped object to be shaped by the shaping device 12. Furthermore, the operation of the shaping device 12 is controlled by transmitting the shaped object data to the shaping device 12, thus causing the shaping device 12 to perform the shaping operation.

As described above, in the present example, the shaping system 10 comprises a plurality of devices as the shaping device 12 and the control PC 14. However, in a variant of the shaping system 10, the shaping system 10 may be configured as a single device. In this case, for example, it is conceivable that the shaping system 10 consists of one shaping device 12 also having the function of the control PC 14. Furthermore, for the sake of convenience of explanation, the configuration including the shaping device 12 and the control PC 14 is referred to as the shaping system 10 in the description above and below. However, when considered in a more generalized manner, the entire shaping system 10 described above and below can also be considered as a shaping device. In this case, the shaping device 12 shown in FIG. 1A can be regarded as, for example, the main body portion of the shaping device or the like. Furthermore, the control PC 14, for example, can be considered as a control portion of the shaping device or the like.

Next, a specific configuration of the shaping device 12 will be described. FIG. 1B shows one example of a configuration of a shaping device 12. In the present example, the shaping device 12 is a shaping device that shapes a three-dimensional shaped object 50, and includes a head unit 102, a shaping table 104, a scan driving unit 106, a dither matrix storage unit 108, a slice data generating unit 110, and a control unit 120. Other than the points described below, the shaping device 12 may have a configuration same as or similar to a known shaping device. More specifically, other than the points described below, the shaping device 12 may have a configuration same as or similar to a known shaping device that carries out shaping by ejecting droplets, which become the material of the shaped object 50, using an inkjet head. Furthermore, other than the illustrated configuration, the shaping device 12 may further include, for example, various types of configurations necessary for the shaping, and the like of the shaped object 50. Moreover, in the present example, the shaping device 12 is a shaping device (3D printer) that shapes a three-dimensional shaped object 50 through the layering shaping method. In this case, the layering shaping method is, for example, a method of shaping the shaped object 50 by overlapping a plurality of layers. The shaped object 50 is, for example, a stereoscopic three-dimensional structural object.

The head unit 102 is a portion that ejects the material of the shaped object 50. In the present example, ink is used as the material of the shaped object 50. In this case, the ink is, for example, a functional liquid. Furthermore, in the present example, liquid, and the like ejected from the inkjet head can also be considered as the ink. More specifically, the head unit 102 ejects ink that cures according to predetermined conditions from a plurality of inkjet heads as the material of the shaped object 50. Then, by curing the ink after landing, the respective layers constituting the shaped object 50 are formed in an overlapping manner, and a shaped object is shaped through the layering shaping method. In the present example, an ultraviolet curable ink (UV ink) that cures from a liquid state by being irradiated with an ultraviolet light is used as the ink. Furthermore, the head unit 102 further ejects the material of a support layer 52 in addition to the material of the shaped object 50. The head unit 102 thus forms the support layer 52 at the periphery of the shaped object 50, as necessary. The support layer 52 is, for example, a layered structural object that supports the shaped object 50 by surrounding the outer periphery of the shaped object 50 being shaped. The support layer 52 is formed as necessary at the time of shaping the shaped object 50 and removed after the shaping is completed.

The shaping table 104 is a trapezoidal member that supports the shaped object 50 being shaped, and is disposed at a position facing the inkjet head in the head unit 102, and mounts the shaped object 50 being shaped on the upper surface thereof. Furthermore, in the present example, the shaping table 104 has a configuration in which at least the upper surface is movable in a layering direction (Z direction in the drawing), and moves at least the upper surface in accordance with the progress in the shaping of the shaped object 50 by being driven by the scan driving unit 106. In this case, the layering direction is, for example, a direction in which the shaping material is layered in the layering shaping method. More specifically, in the present example, the layering direction is a direction orthogonal to a main scanning direction (Y direction in the drawing) and a sub-scanning direction (X direction in the drawing) set in advance in the shaping device 12.

The scan driving unit 106 is a driving unit that causes the head unit 102 to perform a scanning operation of relatively moving with respect to the shaped object 50 being shaped. In this case, "relatively moving with respect to the shaped object 50 being shaped" means, for example, relatively moving with respect to the shaping table 104. To cause the head unit 102 to perform the scanning operation means, for example, to cause the inkjet head of the head unit 102 to perform the scanning operation. Furthermore, in the present example, the scan driving unit 106 causes the head unit 102 to perform the main scanning operation (Y scanning), the sub-scanning operation (X scanning), and the layering direction scanning (Z scanning).

The main scanning operation is, for example, an operation of ejecting ink while relatively moving in the main scanning direction with respect to the shaped object 50 being shaped. The sub-scanning operation is, for example, an operation of relatively moving with respect to the shaped object 50 being shaped in the sub-scanning direction orthogonal to the main scanning direction. Furthermore, the sub-scanning operation can be considered as, for example, an operation of relatively moving with respect to the shaping table 104 in the sub-scanning direction by a preset feed amount, or the like. Furthermore, in the present example, the scan driving unit 106 causes the shaping device 12 to perform the sub-scanning operation between the main scanning operations. Moreover, the layering direction scanning is, for example, an operation of relatively moving the head unit 102 in the layering direction with respect to the shaped object 50 being shaped. In addition, the scan driving unit 106 adjusts the relative position of the inkjet head with respect to the shaped object 50 being shaped in the layering direction by causing the head unit 102 to perform the layering direction scanning in accordance with the progress of the shaping operation.

The dither matrix storage unit 108 is a storage unit that stores a dither matrix used at the time of generating the slice data. The features of the dither matrix used in the present example will be described in detail later. The slice data generating unit 110 is a processing unit that generates slice data, and generates a plurality of slice data based on the shaped object data received from the control PC 14. In this case, the slice data is, for example, data indicating a cross section of the shaped object. At the time of generating the slice data, halftone processing is performed using the dither matrix read from the dither matrix storage unit 108. The operation of generating the slice data, the usage of the dither matrix, and the like will be described in detail later.

A processing device or the like having a higher image processing capability than the control unit 120 is preferably used as the slice data generating unit 110. More specifically, for example, a processing device using a GPU (Graphics Processing Unit) or the like can be suitably used as the slice data generating unit 110. Furthermore, for example, the slice data generating unit 110 may generate the slice data while causing the control unit 120 to perform a part of the processing. In this case, instead of assuming the slice data generating unit 110 and the control unit 120 as separate configurations, as shown in FIG. 1B, a combination of both configurations may be considered as the slice data generating unit.

The control unit 120 is, for example, a CPU of the shaping device 12, and controls the shaping operation of the shaped object 50 by controlling each unit of the shaping device 12. Furthermore, in the present example, the control unit 120 controls the operations of the head unit 102, the scan driving unit 106, and the like based on the slice data generated by the slice data generating unit 110. In addition, in this case, for example, the control unit 120 controls the operation of each inkjet head in the head unit 102 to cause each inkjet head to eject the ink to use for the shaping of the shaped object. According to such a configuration, for example, the shaping of the shaped object 50 can be appropriately carried out. Furthermore, in the present example, the control unit 120 further controls the timing to cause the head unit 102 to start the shaping operation. The timing to cause the head unit 102 to start the shaping operation is, for example, the timing to cause each inkjet head of the head unit 102 to start ejecting the ink. In this case, the head unit 102 may be caused to start the shaping operation before the generation of all the slice data is completed in the slice data generating unit 110. Thus, according to such a configuration, for example, the shaping of the shaped object can be efficiently and appropriately carried out. Depending on the required quality of shaping or the like, for example, the head unit 102 may be caused to start the shaping operation after the generation of all the slice data is completed in the slice data generating unit 110 based on the instruction of the user.

Subsequently, the configuration of the head unit 102 will be described in more detail. FIG. 1C shows one example of a configuration of a head unit 102. In the present example, the head unit 102 includes a plurality of inkjet heads, a plurality of ultraviolet light sources 204, and a flattening roller 206. As shown in the drawing, the plurality of inkjet heads include an ink jet head 202s, an ink jet head 202w, an ink jet head 202y, an ink jet head 202m, an ink jet head 202c, an ink jet head 202k, and an ink jet head 202t. The plurality of inkjet heads are, for example, arranged side by side in the main scanning direction with their positions in the sub-scanning direction aligned. Furthermore, each inkjet head includes a nozzle row, in which a plurality of nozzles are lined in a predetermined nozzle row direction, on a surface facing the shaping table 104. Moreover, in the present example, the nozzle row direction is a direction parallel to the sub-scanning direction.

Among these inkjet heads, the inkjet head 202s is an inkjet head that ejects the material of the support layer 52. For example, a known material for the support layer can be suitably used for the material of the support layer 52. The inkjet head 202w is an inkjet head that ejects white (W color) ink. In addition, in the present example, the white ink is one example of a light reflective ink, and is used, for example, when forming a region (light reflecting region) having a property of reflecting light in the shaped object 50. More specifically, in the present example, the interior region constituting the interior of the shaped object 50 is formed as a region which also serves as a light reflecting region using the white ink.

The inkjet head 202y, the inkjet head 202m, the inkjet head 202c, and the inkjet head 202k (hereinafter referred to as the inkjet heads 202y to 202k) are inkjet heads for coloring used at the time of shaping the colored shaped object 50. More specifically, the ink jet head 202y ejects ink of yellow color (Y color). The inkjet head 202m ejects ink of magenta color (M color). The ink jet head 202c ejects ink of cyan color (C color). Furthermore, the ink jet head 202k ejects ink of black color (K color). In addition, in this example, each color of YMCK is one example of process colors used for full color representation by subtractive color mixing method. Moreover, these inks of each color are one example of a coloring material. The inkjet head 202t is an inkjet head that ejects a clear ink. The clear ink is, for example, an ink of clear color which is a colorless transparent color (T).

The plurality of ultraviolet light sources 204 are light sources (UV light sources) for curing ink, and generate an ultraviolet light that cures the ultraviolet curable ink. Moreover, in the present example, each of the plurality of ultraviolet light sources 204 is arranged on one end side and the other end side in the main scanning direction in the head unit 102 so as to sandwich the plurality of inkjet heads in between. For example, UVLED (ultraviolet LED) and the like can be suitably used for the ultraviolet light source 204. Furthermore, consideration is also made to use a metal halide lamp, a mercury lamp, and the like for the ultraviolet light source 204. The flattening roller unit 206 is a flattening means for flattening the layer of ink formed during the shaping of the shaped object 50. The flattening roller 206, for example, flattens the layer of ink by making contact with a surface of the layer of ink and removing one part of the ink before being cured at the time of the main scanning operation.

The ink layer constituting the shaped object 50 can be appropriately formed by using the head unit 102 having the above-described configuration. Furthermore, the shaped object 50 can be appropriately shaped by forming a plurality of ink layers in an overlapping manner. Moreover, the specific configuration of the head unit 102 is not limited to the configuration described above, and can be variously modified. For example, the head unit 102 may further include an ink jet head for color other than the above as an inkjet head for coloring. In addition, the arrangement of a plurality of ink jet heads in the head unit 102 can be variously modified. For example, the positions in the sub-scanning direction of some inkjet heads may be shifted from the other inkjet heads.

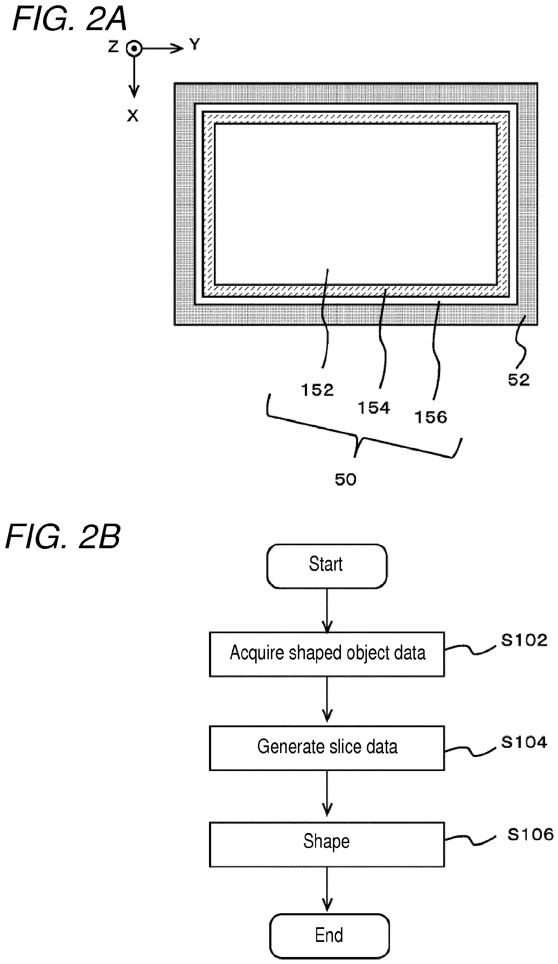

The configuration of the shaped object 50 shaped by the shaping device 12 of the present example, the operation of shaping the shaped object 50, and the like will now be described in more detail. FIG. 2 is a view explaining the shaped object 50 to be shaped by the shaping device 12 of the present example and the shaping operation. FIG. 2A is a view showing one example of the configuration of the shaped object 50, and shows one example of the configuration of an X-Y cross section, which is a cross section of the shaped object 50 orthogonal to the layering direction (Z direction), together with the support layer 52. In this case, the configurations of the Z-X cross section and the Z-Y cross section of the shaped object 50 perpendicular to the Y direction and the Z direction also have similar configuration.

As described above, in the present example, the shaping device 12 (see FIG. 1) shapes the colored shaped object 50 using, for example, the ink jet heads 202y to 202k (see FIG. 1). In this case, a shaped object 50 in which at least the surface is colored is shaped as the shaped object 50. When the surface of the shaped object 50 is colored, this means that, for example, at least one part of a region where colors can be visually recognized from the outside is colored in the shaped object 50. Furthermore, in this case, the shaping device 12 shapes the shaped object 50 including an interior region 152, a coloring region 154, and a protective region 156, for example, as shown in the drawing. Moreover, the support layer 52 is formed at the periphery of the shaped object 50, and the like, as necessary.

The interior region 152 is a region that constitutes the interior of the shaped object 50. The interior region 152, for example, can be considered as a region constituting the shape of the shaped object 50. In the present example, the shaping device 12 forms the interior region 152 using white ink ejected from the ink jet head 202w (see FIG. 1). Furthermore, as described above, a region also serving as a light reflecting region is formed as the interior region 152. In this case, the light reflecting region is, for example, a region formed on the inner side of the coloring region 154 to reflect the light entering from the outer side of the shaped object 50 through the coloring region 154 and the like.

The coloring region 154 is a region colored by inks for coloring ejected from the inkjet heads 202y to 202k. In the present example, the shaping device 12 uses the ink for coloring ejected from the inkjet heads 202y to 202k and the clear ink ejected from the inkjet head 202t (see FIG. 1) to form the coloring region 154 at the periphery of the interior region 152. In this case, for example, various colors are represented by adjusting the ejection amount of the inks for coloring of each color to each position. Furthermore, the clear ink is used to compensate for a change in the amount of ink for coloring caused by a difference in color (for example, ejection amount per unit volume is 0% to 100%) to a constant amount. According to such a configuration, for example, each position of the coloring region 154 can be appropriately colored with a desired color.

The protective region 156 is a transparent region (outer transparent region) for protecting the outer surface of the shaped object 50. In the present example, the shaping device 12 forms the protective region 156 at the periphery of the coloring region 154 using the clear ink ejected from the inkjet head 202t. Furthermore, the head unit 102 thereby forms the protective region 156 so as to cover the outer side of the coloring region 154 using a transparent material. In this case, since the protective region 156 is transparent, the coloring region 154 formed on the inner side thereof is formed in a region where colors can be visually recognized from the outside. According to this example, for example, the shaped object 50 in which the surface is colored can be appropriately formed by forming each region as described above.

In a variant of the configuration of the shaped object 50, a specific configuration of the shaped object 50 may be made different from the above. More specifically, for example, the light reflecting region may be formed as a separate region from the interior region 152. In this case, for example, the light reflecting region is separately formed at the periphery of the interior region 152. Furthermore, the coloring region 154 is formed on the further outer side thereof. In this case, the interior region 152 may be formed using any ink other than the material of the support layer 52. Furthermore, the interior region 152 may be formed using, for example, a shaping material ink (Mo ink) or the like. In this case, the shaping material ink is, for example, an ink dedicated to shaping for use in shaping the interior (interior region) of the shaped object 50. Moreover, it is also conceivable to omit the region of one part in the shaped object 50. In this case, for example, it is conceivable to omit the protective region 156.

Furthermore, in the operation of shaping the shaped object 50, for example, the shaping device 12 performs the operation shown in the flowchart of FIG. 2B. FIG. 2B is a flowchart showing one example of shaping operation performed by the shaping device 12. As described above, in the present example, the shaping device 12 receives the shaped object data indicating the shaped object 50 to shape from the control PC 14 (see

FIG. 1) (S102), and shapes the shaped object based on the shaped object data. In addition, in this case, a plurality of slice data are generated based on the shaped object data (S104). The ink is then ejected from each inkjet head of the head unit 102 (see FIG. 1) in accordance with each slice data, thereby shaping the shaped object 50 (S106).

In FIG. 2B, for the sake of convenience of illustration and explanation, a flowchart is shown such that the operation of step S106 is performed after the generation of the slice data is performed in step S104. In this case, for example, it is conceivable to start the formation of a layer of ink constituting the shaped object 50 after the generation of all the slice data is completed. Furthermore, in order to shorten the time required for shaping, for example, the generation of slice data and the formation of layer of ink may be carried out simultaneously in parallel. In this case, for example, it is conceivable to start the formation of the layer of ink corresponding to the generated slice data at the time point the generation of some slice data is completed. Thus, according to such a configuration, the shaping of the shaped object 50 can be efficiently and appropriately carried out.

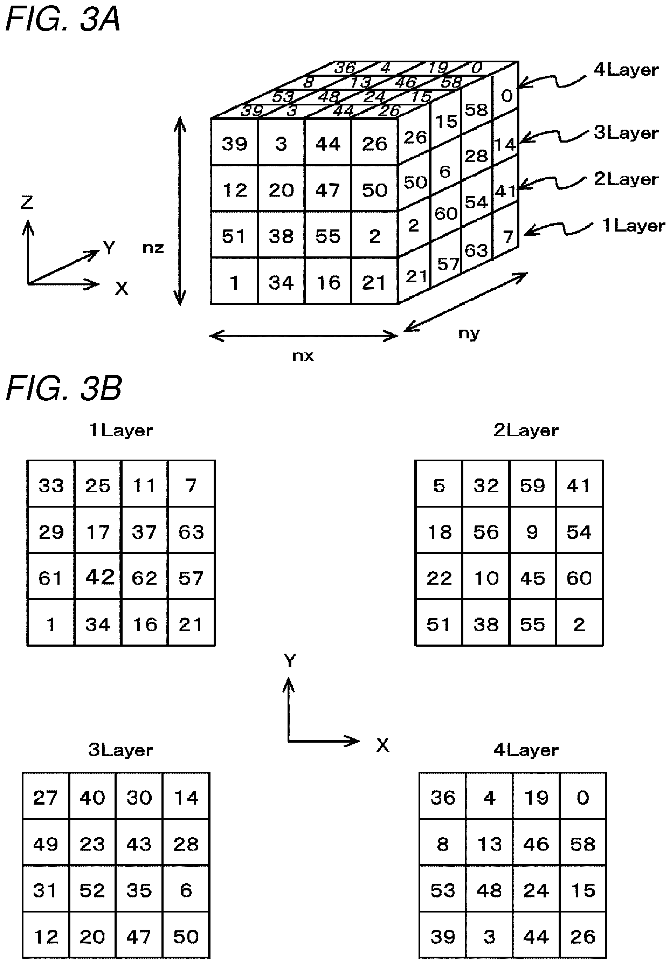

The operation of generating the slice data will now be described in more detail. First, the dither matrix used at the time of generating the slice data will be described. FIG. 3 is a view explaining a dither matrix used in the present example. FIG. 3A shows one example of a dither matrix stored in the dither matrix storage unit 108 (see FIG. 1).

In the present example, the dither matrix storage unit 108 stores a three-dimensional matrix (three-dimensional dither matrix) as a dither matrix to use at the time of generating the slice data. In this case, the three-dimensional matrix is a matrix in which elements are lined in each direction of three dimensions, as shown in the drawing. More specifically, in the present example, the elements are lined in each direction of XYZ, as shown in the drawing, in the three-dimensional matrix stored in the dither matrix storage unit 108. In this case, the X direction is a direction parallel to the sub-scanning direction. The Y direction is a direction parallel to the main scanning direction. The Z direction is a direction parallel to the layering direction. Furthermore, when referring to the elements being lined in each direction of XYZ in the three-dimensional matrix, this means that the directions in which the elements are lined are corresponded with the sub-scanning direction, the main scanning direction, and the layering direction at the time of using the dither matrix described below.

Furthermore, a three-dimensional matrix can be considered as, for example, a configuration in which a plurality of two-dimensional matrices are overlapped. More specifically, the three-dimensional matrix stored in the dither matrix storage unit 108 can be considered as being formed by, for example, overlapping a plurality of two-dimensional matrices parallel to a plane (XY plane) orthogonal to the layering direction. In addition, in this case, the two-dimensional matrix overlapped in the layering direction can be considered as a two-dimensional dither matrix used at the time of forming one ink layer. In this case, the three-dimensional matrix can be considered as being formed by overlapping a plurality of two-dimensional dither matrices. Furthermore, the dither matrix storage unit 108 can be assumed as storing a plurality of two-dimensional dither matrices by storing the three-dimensional matrix.

FIG. 3B shows one example of a plurality of two-dimensional dither matrices overlapped in a three-dimensional matrix. In the case of the configuration shown in the drawing, the three-dimensional matrix shown in FIG. 3A is formed by overlapping four two-dimensional dither matrices which are each distinguished by letters 1 to 4 Layer in FIGs. 3A and 3B. In addition, in this case, these four two-dimensional dither matrices are overlapped in the order of 1 Layer, 2 Layer, 3 Layer, and 4 Layer from the lower side in the layering direction as shown in FIG. 3A. In this case, the four two-dimensional dither matrices can be considered as being lined in a preset order. Furthermore, in this example, such an order is the order of using the respective two-dimensional dither matrices when generating the slice data. More specific usage of the dither matrix will be described in more detail later in association with the operation of generating the slice data.

In the case of using a three-dimensional matrix as in this example, the values of the elements of the three-dimensional matrix are preferably set such that the same numerical value is not continuously lined. In this case, the same numerical values not being continuously lined means, for example, that adjacent elements in the matrix do not have the same value. Furthermore, adjacent elements are elements adjacent to each other in any direction of XYZ, for example. Moreover, in this case, it is more preferable to set in such a manner that the same numerical values are not continuously lined even in a diagonal direction intersecting each direction of XYZ, in addition to each direction of XYZ. In this case, the values of a plurality of elements may be the same (same value) in the three-dimensional matrix if the same numerical values are not continuously lined.

In FIG. 3, for the sake of convenience of illustration and explanation, a three-dimensional matrix having a size in each direction of XYZ of 4 is shown. In this case, the size of the matrix in each direction of XYZ is the number of elements lined in each direction of XYZ. However, the size of the matrix is not limited to the illustrated configuration, and various modifications can be made. In an actual configuration, a matrix having a larger size in each direction is preferably used as a three-dimensional matrix. More specifically, when the number of elements lined in each direction of XYZ is nx, ny, and nz as shown in the drawing, nx, ny, and nz can be assumed to be set to, for example, 256 or more (e.g., about 512, etc.).

Furthermore, in this case, the numbers nx, ny, and nz of elements lined in each direction may be different from each other. More specifically, for example, it is conceivable to use a matrix in which the size in each direction is set according to the resolution of shaping as a three-dimensional matrix. The size in each direction being set according to the resolution of the shaping means, for example, that the number of elements of the three dimensional matrix to be lined is set such that the number of elements lined is larger in the direction corresponding to the direction of higher resolution of shaping. Further, more specifically, in the case of shaping a shaped object through the layering shaping method using the inkjet head, the dot of the landed ink spreads in a plane orthogonal to the layering direction, and hence the resolution in the layering direction is usually higher than the resolution in the main scanning direction or the sub-scanning direction, which is the direction within the plane orthogonal to the layering direction. In this case, the size (number of elements that are lined) of the matrix in the Z direction corresponding to the layering direction is preferably larger than the size in each of the Y direction and the X direction corresponding to the main scanning direction and the sub-scanning direction. For example, the resolution of shaping may differ between the main scanning direction and the sub-scanning direction depending on the configuration of the shaping device 12. In such a case, it is conceivable to make the size of the matrix in the X direction different from the size of the matrix in the Y direction.

In addition, in this case, it is preferable to make the size of the matrix in each direction different, for example, according to the difference in resolution. When referring to making the size of the matrix different according to the difference in resolution, this means, for example, making the size of the matrix in each direction proportional to the resolution in each direction. According to such a configuration, for example, distances corresponding to the period of repeatedly applying the dither matrix in the halftone processing, to be described in more detail later, can be appropriately equalized in each direction. Moreover, for example, the halftone processing that matches the resolution in each direction can be more appropriately carried out. When referring to making the size of the matrix proportional to the resolution, this may be, for example, making it substantially proportional by allowing misalignment or the like of a certain extent caused by control convenience or the like. Moreover, a feature using a matrix in which the size in each direction is set according to the resolution of shaping can also be considered as, for example, a feature using a matrix set such that a region corresponding to a three-dimensional matrix in a shaped object becomes closer to a cube, and the like.

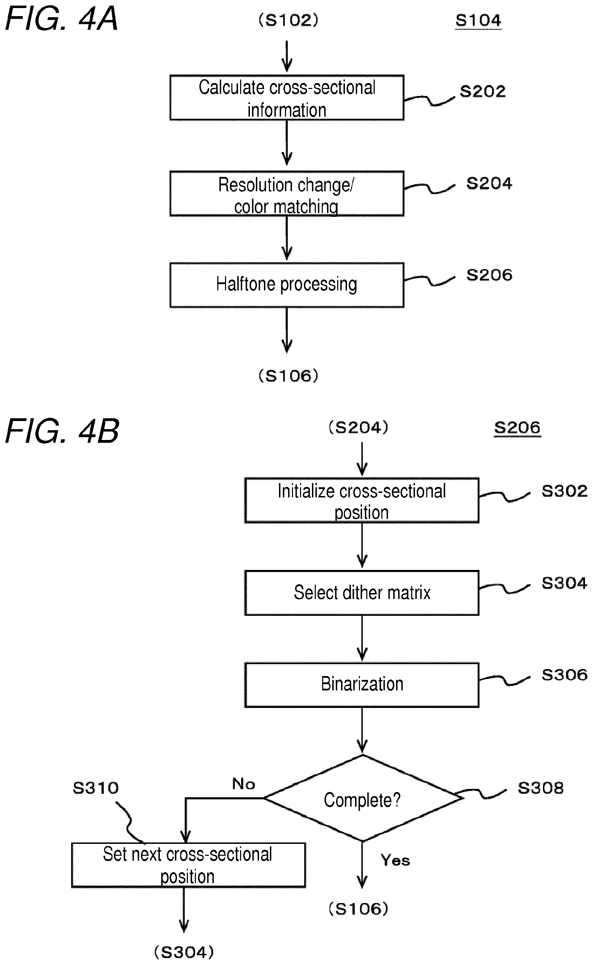

Next, an operation of generating the slice data using such a three-dimensional matrix will be described. FIG. 4 is a view explaining an operation of generating the slice data. FIG. 4A is a flowchart showing one example of an operation of generating the slice data, and shows one example of a detailed operation performed in step S104 in the flowchart shown in FIG. 2. FIG. 4B is a flowchart showing one example of an operation of a halftone processing performed at the time of generating the slice data.

In the operation of generating the slice data, the slice data generating unit 110 (see FIG. 1) creates the slice data by slicing the shaped object indicated by the shaped object data into a slice form. Furthermore, in this operation, the slice data generating unit 110 first calculates the cross-sectional information of the shaped object based on the shaped object data (S202). In addition, in this case, as the cross-sectional information, data indicating the cross section of the shaped object at the cross-sectional position corresponding to each of the plurality of slice data is calculated based on the shape and color of the portion corresponding to each cross-sectional position in the shaped object data. More specifically, in this case, the slice data generating unit 110 calculates, as the cross-sectional information, for example, data indicating the shape and color of the cross section of the shaped object with respect to a plurality of cross-sectional positions lined in the layering direction at an interval set in advance. Furthermore, for example, a plurality of pieces of cross-sectional information corresponding to the ultimately generated plurality of slice data are calculated. In this case, each cross-sectional information can be considered as being corresponded with each of a plurality of ink layers formed, for example, at the time of shaping the shaped object. Furthermore, the cross-sectional information can also be considered as further indicating which ink layer it corresponds to by being corresponded with each ink layer. Furthermore, the slice data generating unit 110 performs processes such as resolution conversion, color matching, etc. in accordance with the resolution, the color of ink used for shaping, and the like set in advance according to the configuration of the shaping device 12 and the like with respect to the calculated cross-sectional information (S204). Moreover, the halftone processing is performed on the cross-sectional information having been subjected to such processes (S206). The slice data generating unit 110 thereby generates a plurality of slice data.

Here, in FIG. 4A, for the sake of convenience of explanation, one example of an operation in the case of executing the operations of steps S202 to 206 in order as described above has been described. However, in the variant of the operation of the slice data generating unit 110, for example, the operations of steps S202 to 206 may be performed in parallel. In this case, for example, it is conceivable to collectively carry out the operations of steps S202 to 206 by performing processing such as resolution conversion, color matching, or the like based on the cross-sectional information, halftone processing, and the like every time the cross-sectional information for one cross-sectional position is calculated.

In the halftone processing, as shown in FIG. 4B, for example, the cross-sectional position is first initialized (S302). In this case, initializing the cross-sectional position means setting the cross-sectional position corresponding to the slice data to generate first. With regard to such a cross-sectional position, for example, the cross-sectional position can also be thought as a cross-sectional position corresponding to the ink layer (the bottommost ink layer) that is formed first among the plurality of ink layers layered at the time of shaping the shaped object.

After the cross-sectional position is set, the slice data generating unit 110 selects a dither matrix to use at the time of generating the slice data to generate next (S304). Then, the process of binarization is performed by the dither method using the selected dither matrix (S306). In this case, when referring to selecting the dither matrix, this means determining which one of the two-dimensional matrices overlapping in the three-dimensional matrix stored in the dither matrix storage unit 108 (see FIG. 1) to use. When performing the halftone processing using the dither matrix, the dither matrix is generally applied to a region wider than the size of the dither matrix by repeatedly using the same matrix for each direction. Therefore, when performing the halftone processing using the three-dimensional matrix as in the present example, the three-dimensional matrix is repeatedly used for each direction of XYZ. In this case, when referring to selecting the dither matrix, this means, for example, selecting a two-dimensional matrix corresponding to the relevant cross-sectional position among a plurality of two-dimensional matrices overlapping in the Z direction. More specifically, for example, in the case of using the three-dimensional matrix described with reference to FIG. 4, in the halftone processing performed at the time of generating the first slice data, the slice data generating unit 110 performs the process by the dither method using a portion corresponding to 1 Layer of each portion of the three-dimensional matrix indicated as 1 Layer to 4 Layer in FIG. 4. This operation can be considered as, for example, an operation using a dither matrix corresponding to 1 Layer out of a plurality of dither matrices overlapped in the three-dimensional matrix, and the like.

If the generation of all the slice data is completed at the time of performing the binarization process (S308: Yes), the halftone processing is completed, and the process proceeds to the operation of step S106 of carrying out the shaping of the shaped object. Furthermore, if the generation of all the slice data is not completed (S308: No), the next cross-sectional position is set (S310), and the operations of step S304 and subsequent steps are repeated. Setting the next cross-sectional position means, for example, setting the cross-sectional position corresponding to the slice data to generate next. In addition, the slice data to generate next is the slice data corresponding to the ink layer overlapped on the ink layer corresponding to the slice data generated immediately before. Furthermore, in this case, the dither matrix corresponding to the newly set cross-sectional position is selected in the operation of step S304. More specifically, for example, in the case of generating the second slice data after generating the first slice data, the slice data generating unit 110 performs the processing by the dither method using a portion corresponding to 2 Layer in the three-dimensional matrix. In this case, the second slice data is the slice data corresponding to the ink layer formed second from the bottom in the layering direction. Similarly, the slice data corresponding to the ink layer formed at the nth position (n is an integer greater than or equal to one) from the bottom in the layering direction is referred to as the nth slice data in the description below.

Thereafter, at the time of generating the third slice data, the slice data generating unit 110 performs the processing by the dither method using a portion corresponding to 3 Layer in the three-dimensional matrix. Furthermore, when generating the fourth slice data, processing by the dither method is performed using a portion corresponding to 4 Layer in the three-dimensional matrix. Moreover, as described above, in the halftone processing of the present example, the three-dimensional matrix is repeatedly used for each direction of XYZ. In this case, at the time of generating the fifth slice data, processing by the dither method is performed using again the portion corresponding to 1 Layer in the three-dimensional matrix. The portions corresponding to 1 to 4 Layers are sequentially used in the same order thereafter.

According to such a configuration, the halftone processing by the dither method can be appropriately performed at the time of generating each slice data. In this case, for example, a dither matrix (pattern of dither matrix) to use at the time of generating the slice data corresponding to the ink layers that are successively overlapped can be made different from each other by sequentially using the portions corresponding to 1 to 4 Layers in the three-dimensional matrix. In this case, a problem that occurs by using the dither matrix having the same pattern can be prevented, so that, for example, accumulation of ink in the same state at the same place can be appropriately prevented. Furthermore, for example, it is possible to appropriately prevent the occurrence of unintended continuous stripes and the like due to coloring and the like. Moreover, in this case, for example, a state in which graininess is difficult to produce can be realized by appropriately dispersing the ink dots. Therefore, according to the present example, for example, a high-quality shaped object can be more appropriately shaped. In this case, for example, a plurality of dither matrices are sequentially used in the order set in advance at the time of generating the respective slice data by sequentially using the portions corresponding to 1 to 4 Layers. In this case, the quality of the shaped object to be shaped can be more appropriately predicted as compared with the case where the dither matrix is uncertainly used through a method of, for example, randomly switching the dither matrix or the like. Furthermore, for example, when the quality of the shaped object which has actually been shaped does not become a desired quality, it is possible to more easily investigate the cause. Therefore, according to the present example, a high quality shaped object can be more appropriately shaped with regards to such a point.

Here, the features and the like of the halftone processing performed in the present example will be described in more detail. In this example, for example, data indicating the position to eject the ink of each color used for shaping is used as the slice data. In this case, the halftone processing can be considered as, for example, processing for determining at least the ejection position of the ink constituting the coloring region 154 (see FIG. 2) among the portions constituting the shaped object. Furthermore, in this case, for example, at the time of generating the slice data, the slice data generating unit 110 determines at least a position to eject ink with respect to the coloring region 154 by performing the halftone processing using the dither matrix. With such a configuration, for example, representation of halftones, and the like can be appropriately carried out. Various colors thus can be appropriately represented using the inks of each color of YMCK. As described above, according to the present example, for example, the slice data corresponding to a shaped object in which at least the surface is colored can be appropriately generated. Furthermore, for example, a shaped object in which at least the surface is colored can be appropriately shaped. Moreover, in this case, it is conceivable to determine the ejection position of the ink without performing the halftone processing for each region other than the coloring region 154. In this case, with respect to each region other than the coloring region 154 (e.g., interior of the shaped object, etc.), it is conceivable to perform formation in a predetermined color by ejecting the ink of a predetermined color at a concentration of 100%. According to such a configuration, for example, the data processing amount at the time of generating the slice data can be appropriately reduced.

With respect to the configuration of the present example, for example, a configuration using the two-dimensional dither matrix (for example, portions corresponding to 1 to 4 Layers) constituting one part of the three-dimensional matrix may be considered as, for example, a configuration using a plurality of fixed dither matrices. In this case, for example, the management of the dither matrix can be appropriately prevented from becoming complicated by using the plurality of fixed dither matrices. The operation of the slice data generating unit 110 using these dither matrices may be considered as, for example, an operation of determining at least a position to eject the coloring ink by performing the halftone processing using any dither matrix stored in the dither matrix storage unit 108. In this case, as to the manner of selecting the dither matrix, the dither matrix to use at the time of generating the respective slice data is sequentially changed according to the order in which the plurality of dither matrices are overlapped in the three-dimensional matrix every time one slice data is generated. With such a configuration, for example, the plurality of dither matrices can be more easily and appropriately managed. Furthermore, in this case, the halftone processing performed in the present example can also be considered as processing performed using a fixed (definitive) three-dimensional dither matrix or the like.

Furthermore, when considering the manner of selecting the dither matrix more generally, for example, it is possible to consider selecting one dither matrix from a plurality of dither matrices prepared in advance for a dither matrix to use at the time of generating the respective slice data, and changing the dither matrix to select in a preset order every time one slice data is generated. In addition, in the above description, the operation in the case of changing the selection of the dither matrix every time one slice data is generated has been mainly described. However, depending on the quality required for shaping, and the like, consideration can also be made to change the selection of the dither matrix every time two or more slice data are generated. In this case, the slice data generating unit 110 changes the dither matrix to use at the time of generating each slice data, for example, in a preset order every time a preset number of slice data are generated.

Furthermore, as described above, the three-dimensional matrix used in the present example can be considered as being obtained by, for example, overlapping a plurality of two-dimensional dither matrices in the layering direction. In this case, it is conceivable to use different dither matrices for the plurality of two-dimensional dither matrices. Furthermore, in this case, for example, the matrix same as or similar to the known dither matrix can be suitably used for the plurality of two-dimensional dither matrices. More specifically, for example, the matrix same as or similar to the dither matrix used in the dither method such as Bayer type or the like can be suitably used as each of the plurality of two-dimensional dither matrices.

In the above description, the operation and the like in the case where the dither matrix storage unit 108 stores one kind of three-dimensional matrix has been mainly described. However, in the variant of the configuration of the shaping device 12 (see FIG. 1), the dither matrix storage unit 108 may store a plurality of three-dimensional matrices different from each other. With such a configuration, the dither matrix to use can be appropriately changed, for example, according to the quality and the like required for the shaped object to shape. Furthermore, in this case, at the time of generating a plurality of slice data corresponding to one shaped object, the slice data generating unit 110 selects, for example, one of the three-dimensional matrices stored in the dither matrix storage unit 108. Then, the dither matrix to use at the time of generating each slice data is sequentially changed according to the order in which the plurality of dither matrices are overlapped in the selected three-dimensional matrix every time a preset number of slice data (for example, one slice data) are generated. With this configuration, the dither matrix to use can be appropriately changed, for example, in accordance with the selected three-dimensional matrix.

In this case, it is also conceivable to store a plurality of three-dimensional matrices having different sizes, for example, in the dither matrix storage unit 108. In this case, when referring to the size of the three-dimensional matrix being different, this means, for example, that at least a size in a plane orthogonal to a direction in which the plurality of dither matrices are overlapped in a three-dimensional matrix is different. The feature in which the size of the three-dimensional matrix is different, for example, can also be considered as a feature in which the size of the two-dimensional dither matrix included in the three-dimensional matrix is different. With such a configuration, various dither matrices can be easily and appropriately used. More specifically, in this case, it is conceivable to select a three-dimensional matrix to use according to the number of colors to represent in the coloring region 154. In this case, for example, in the case of representing the intermediate color more finely, as in the case of representing in full color, it is conceivable to use a three-dimensional matrix having a larger size and the like. Furthermore, the size of the three-dimensional matrix being different may be, for example, that the size in the direction in which the plurality of dither matrices are overlapped in the three-dimensional matrix is different.

### INDUSTRIAL APPLICABILITY

The present disclosure can be suitably applied to, for example, a shaping device.

## Claims

1. A shaping device configured to shape a shaped object by layering a shaping material in a layering direction set in advance, the shaping device comprising:
a slice data generating unit configured to generate a plurality of slice data, which are data respectively indicating cross sections of the shaped object at different positions in the layering direction;
a head unit configured to eject the shaping material based on each slice data; and
a dither matrix storage unit configured to store a plurality of dither matrices; wherein
each slice data is data indicating a position to eject the shaping material;
one or more coloring materials are used for the shaping material;
the slice data generating unit is configured to:
determine a position to eject the coloring material in at least one part of the shaped object by performing halftone processing using any one of the dither matrices stored in the dither matrix storage unit; and
change the dither matrix to use at the time of generating each slice data in a preset order every time a preset number of the slice data are generated.

2. The shaping device according to claim 1, wherein
each of the plurality of dither matrices is a two-dimensional matrix;
the dither matrix storage unit is configured to store the plurality of dither matrices by storing a three-dimensional matrix formed by overlapping the plurality of dither matrices; and
the slice data generating unit is configured to sequentially change the dither matrix to use at the time of generating each slice data according to an order in which the plurality of dither matrices are overlapped in the three-dimensional matrix every time the preset number of slice data are generated.

3. The shaping device according to claim 2, wherein in the three-dimensional matrix, values of elements are set such that the same numerical values are not continuously lined.

4. The shaping device according to claim 2 or 3, wherein the dither matrix storage unit is configured to store a plurality of the three-dimensional matrices different from each other; and
at the time of generating the plurality of slice data corresponding to one shaped object, the slice data generating unit is configured to select any one of the three-dimensional matrices stored in the dither matrix storage unit, and sequentially change the dither matrix to use at the time of generating each slice data according to an order in which the plurality of dither matrices are overlapped in the selected three-dimensional matrix every time the preset number of slice data are generated.

5. The shaping device according to claim 4, wherein the dither matrix storage unit is configured to store a plurality of the three-dimensional matrices having different sizes in a plane orthogonal to a direction in which the plurality of dither matrices are overlapped in the three-dimensional matrix.

6. The shaping device according to any one of claims 2 to 5, further comprising a scan driving unit configured to cause the head unit to perform a main scanning operation of ejecting the shaping material while moving relative to the shaped object in a main scanning direction set in advance; wherein
the direction in which the plurality of dither matrices are overlapped in the three-dimensional matrix is a direction corresponding to the layering direction, and
in a case where a direction orthogonal to the layering direction and the main scanning direction is defined as a sub-scanning direction, with respect to the direction corresponding to each of the layering direction, the main scanning direction, and the sub-scanning direction, the number of elements of the three dimensional matrix to be lined is set such that the number of elements lined is larger in a direction corresponding to a direction of higher resolution of shaping.

7. The shaping device according to any one of claims 1 to 6, wherein
the shaped object in which at least one part of a region where colors are visually recognizable from outside is shaped as the shaped object;
the shaped object includes a coloring region formed in a region where colors are visually recognizable from outside using the coloring material and an interior region formed on an inner side of the coloring region; and
the slice data generating unit is configured to determine at least a position to eject the coloring material with respect to the coloring region by performing halftone processing using the dither matrix.

8. The shaping device according to any one of claims 1 to 7, wherein the slice data generating unit is configured to change the dither matrix to use at the time of generating each slice data in a preset order every time one slice data is generated.

9. A shaping method for shaping a shaped object by layering a shaping material in a layering direction set in advance, the shaping method comprising the steps of:
generating a plurality of slice data, which are data respectively indicating cross sections of the shaped object at different positions in the layering direction;
causing a head unit to eject the shaping material based on each slice data, each slice data being data indicating a position to eject the shaping material;
using one or more coloring materials for the shaping material;
storing a plurality of dither matrices in a dither matrix storage unit;
determining a position to eject the coloring material in at least one part of the shaped object by performing halftone processing using any one of the dither matrices stored in the dither matrix storage unit at the time of generating the slice data; and
changing the dither matrix to use at the time of generating each slice data in a preset order every time a preset number of the slice data are generated.

10. The shaping method according to claim 9, wherein
each of the plurality of dither matrices is a two-dimensional matrix;
the storing step comprises storing the plurality of dither matrices by storing a three-dimensional matrix formed by overlapping the plurality of dither matrices; and
the changing step comprises sequentially changing the dither matrix to use at the time of generating each slice data according to an order in which the plurality of dither matrices are overlapped in the three-dimensional matrix every time the preset number of slice data are generated.

11. The shaping method according to claim 10, wherein in the three-dimensional matrix, values of elements are set such that the same numerical values are not continuously lined.

12. The shaping method according to claim 10 or 11, wherein the storing step comprises storing a plurality of the three-dimensional matrices different from each other; and
the changing step comprises, at the time of generating the plurality of slice data corresponding to one shaped object, selecting any one of the three-dimensional matrices stored in the dither matrix storage unit, and sequentially changing the dither matrix to use at the time of generating each slice data according to an order in which the plurality of dither matrices are overlapped in the selected three-dimensional matrix every time the preset number of slice data are generated.

13. The shaping method according to claim 12, wherein the storing step comprises storing a plurality of the three-dimensional matrices having different sizes in a plane orthogonal to a direction in which the plurality of dither matrices are overlapped in the three-dimensional matrix.

14. The shaping method according to any one of claims 10 to 13, further comprising the step of causing the head unit to perform a main scanning operation of ejecting the shaping material while moving relative to the shaped object in a main scanning direction set in advance; wherein
the direction in which the plurality of dither matrices are overlapped in the three-dimensional matrix is a direction corresponding to the layering direction, and
in a case where a direction orthogonal to the layering direction and the main scanning direction is defined as a sub-scanning direction, with respect to the direction corresponding to each of the layering direction, the main scanning direction, and the sub-scanning direction, the number of elements of the three dimensional matrix to be lined is set such that the number of elements lined is larger in a direction corresponding to a direction of higher resolution of shaping.

15. The shaping method according to any one of claims 9 to 14, wherein
the shaped object in which at least one part of a region where colors are visually recognizable from outside is shaped as the shaped object;
the shaped object includes a coloring region formed in a region where colors are visually recognizable from outside using the coloring material and an interior region formed on an inner side of the coloring region; and
the shaping method further comprises the step of determining at least a position to eject the coloring material with respect to the coloring region by performing halftone processing using the dither matrix.
